# EUROPÄISCHE PATENTSCHRIFT

(11) **EP 4 298 455 B1**
(45) Veröffentlichungstag und Bekanntmachung des Hinweises auf die Patenterteilung: **20.05.2026**
(21) Anmeldenummer: 22710958.4
(22) Anmeldetag: 17.02.2022
(51) Int. Cl.: G01S 5/02, G01S 5/16

(54) **OPTIKBASIERTE KORREKTUR DER POSITION EINER MOBILEINHEIT**
OPTICS-BASED CORRECTION OF THE POSITION OF A MOBILE UNIT
CORRECTION OPTIQUE DE LA POSITION D'UNE UNITÉ MOBILE

(30) Priorität: 25.02.2021 DE 102021201799
(43) Veröffentlichungstag der Anmeldung: 03.01.2024
(73) Patentinhaber: TRUMPF Tracking Technologies GmbH, 71254 Ditzingen (DE)
(72) Erfinder: EPPERLEIN, Peter, 71229 Leonberg (DE); BAAIJ, Ferdinand, 71254 Ditzingen (DE)
(74) Vertreter: Manitz Finsterwald Patent- und Rechtsanwaltspartnerschaft mbB
(86) Internationale Anmeldenummer: PCT/EP2022/053912
(87) Internationale Veröffentlichungsnummer: WO 2022/179927

(56) Entgegenhaltungen:
- EP-A1- 3 336 574
- EP-A1- 3 336 574
- DE-A1- 102010 041 548
- DE-A1- 102017 121 098
- DE-B3- 102017 120 382
- DE-B3- 102017 120 382
- US-A1- 2019 171 780

## Beschreibung

### Hintergrund der Erfindung

Die Erfindung betrifft ein Verfahren zur Ortung einer Mobileinheit in einem Industriefertigungsumfeld. Die Erfindung betrifft weiterhin eine Vorrichtung zur Ortung einer Mobileinheit in einem Industriefertigungsumfeld.

Es ist, insbesondere aus der WO 2019/048149 A1, bekannt, eine Mobileinheit in einem Industriefertigungsumfeld zu lokalisieren, um beispielsweise einen Sammelträger aufzufinden. Obwohl die Ortung der Mobileinheit bereits vergleichsweise präzise erfolgt, ist diese Genauigkeit noch nicht ausreichend, um eine vollständig autonome Fertigung zu ermöglichen. In der Praxis werden daher statische Begrenzungen, beispielsweise in Form von Anschlägen, im Industriefertigungsumfeld errichtet, um insbesondere Sammelträger zu positionieren. Dies begrenzt jedoch wiederum erheblich die Flexibilität des Industriefertigungsumfelds im Hinblick auf rasch wechselnde Aufträge in kleinen Losgrößen.

Aus der DE 10 2010 041548 A1 ist ein Verfahren zur Bestimmung der Positionen von Gegenständen bekannt. Der Stand der Technik umfasst des Weiteren die DE 10 2017 121098 A1 und US 2019/171780 A1.

### Aufgabe der Erfindung

Es ist daher Aufgabe der Erfindung, ein Verfahren und eine Vorrichtung zur Feinlokalisierung einer Mobileinheit bereit zu stellen, die es ermöglichen, auf starre Begrenzungen im Industriefertigungsumfeld zumindest weitestgehend zu verzichten.

### Beschreibung der Erfindung

Diese Aufgabe wird erfindungsgemäß gelöst durch ein Verfahren gemäß Patentanspruch 1 und eine Vorrichtung gemäß Patentanspruch 12. Die abhängigen Patentansprüche geben bevorzugte Weiterbildungen wieder.

Die erfindungsgemäße Aufgabe wird somit gelöst durch ein Verfahren zur Ortung einer Mobileinheit in einem Industriefertigungsumfeld mit den Verfahrensschritten:
A) Groblokalisierung der Mobileinheit anhand von Grob-Positionsdaten eines Manufacturing Execution System (MES);
B) Bewegen einer Sensoreinheit zur Mobileinheit anhand der Grob-Positionsdaten;
C) Senden eines kodierten Signals durch einen ersten Sender der Mobileinheit, Empfangen des Signals durch einen Sensor der Sensoreinheit und Ermitteln der Position des ersten Senders in Form von Signal-Positionsdaten;
D) Identifizieren der Mobileinheit anhand des kodierten Signals und Korrektur der Grob-Positionsdaten anhand der Signal-Positionsdaten.

Durch die auf zwei verschiedene Weisen erfolgende Bestimmung der Positionsdaten der Mobileinheit (des Trackers / Tags / Markers) kann die Mobileinheit besonders präzise lokalisiert werden. Anhand der Kodierung des kodierten Signals wird dabei sichergestellt, dass die Grob-Positionsdaten und die Signal-Positionsdaten vom selben Objekt, nämlich der Mobileinheit, stammen.

Das Identifizieren der Mobileinheit und das Ermitteln der Signal-Positionsdaten kann dabei in beliebiger Reihenfolge oder gleichzeitig erfolgen.

Die Steuerung der Sensoreinheit kann durch das MES erfolgen. Das MES kann drahtlos und/oder drahtgebunden mit der Sensoreinheit kommunizieren.

Das Verfahren wird vorzugsweise in einer Blechverarbeitungsanlage und/oder auf einem Shopfloor durchgeführt.

Die Mobileinheit muss nicht Teil eines Ortungssystems sein. Alternativ dazu kann ein Ortungssystem mit mehreren Ankern zur Laufzeitbestimmung eines Signals von der Mobileinheit dem MES die Grob-Positionsdaten bereitstellen.

Das Ortungssystem weist dabei Anker (Beacons / Satelliten) zur Ortung der Mobileinheit, insbesondere durch Triangulation, auf. Die Ermittlung der Grob-Positionsdaten im Verfahrensschritt A) kann durch ein Ortungssystem in Form eines Ultra-Breitband-Messsystems und/oder durch ein Ortungssystem in Form eines Bluetooth-Messsystems erfolgt/erfolgen. Das Ortungssystem kann in Form eines Indoor-Lokalisierungssystems (Indoor-GPS / Real Time Localization System) ausgebildet sein. Das Ortungssystem kann ein Low-Energy-Bluetooth-Messsystem aufweisen. Das Ortungssystem ist vorzugsweise dazu ausgebildet, die Grob-Positionsdaten der Mobileinheit mit einer Genauigkeit von weniger als 1m, insbesondere von weniger als 0,4m, zu bestimmen.

Alternativ oder zusätzlich dazu kann das MES die Grob-Positionsdaten aus einer Verbuchung ermitteln. Die Verbuchung kann die letzte Rückmeldung sein, die die Mobileinheit und/oder ein führerloses Fahrzeug dem MES mitgeteilt hat. Das Beziehen der Grob-Positionsdaten erfolgt dadurch technisch besonders einfach.

Die Sensoreinheit kann ein fahrerloses Transportfahrzeug aufweisen.

Die Mobileinheit kann sich auf und/oder an einem Sammelträger befinden. Das Bewegen der Sensoreinheit erfolgt bevorzugt unter Berücksichtigung, insbesondere zum Transport, des Sammelträgers (des Ladungsträgers / der Palette). Besonderes bevorzugt wird der Sammelträger auf die Sensoreinheit geladen und/oder der Sammelträger wird von der Sensoreinheit entladen. Das fahrerlose Transportfahrzeug kann zum vertikalen Bewegen des Sammelträgers ausgebildet sein. Insbesondere kann das Transportfahrzeug in Form eines Gabelstaplers ausgebildet sein.

Erfindungsgemäß wird kodierte Signal in Form eines kodierten Lichtsignals ausgesendet. Das Lichtsignal kann im sichtbaren Bereich ausgesendet werden.

Eine weitere konstruktive Vereinfachung wird erreicht, wenn das kodierte Signal durch den Sensor in Form einer Kamera empfangen wird. In diesem Fall können die Signal-Positionsdaten anhand eines Kamerabildes bestimmt werden.

Die Sensoreinheit kann ein Handheld Device aufweisen. Mit Handheld Device ist ein Gerät gemeint, das eingerichtet ist, von einem Benutzer in der Hand gehalten zu werden, dabei diesem Benutzer Daten und/oder Informationen auszugeben und anzuzeigen, sowie aufzunehmen, und Daten und Informationen, insbesondere digital und kabellos, mit anderen Geräten auszutauschen und Daten zu verarbeiten. Das Handheld Device kann in Form eines Smartphones ausgebildet sein. Besonders bevorzugt wird als Sensor in Form einer Kamera eine in das Handheld Device bzw. Smartphone integrierte Kamera eingesetzt.

Das Handheld Device kann ein Display aufweisen, auf dem die Mobileinheit angezeigt wird, wenn sie von der Kamera aufgenommen wird. Durch ein solches Livebild der Mobileinheit wird das Auffinden der Mobileinheit durch einen Nutzer des Handheld Device wesentlich erleichtert.

In besonders bevorzugter Ausgestaltung der Erfindung wird die Mobileinheit auf dem Display hervorgehoben, markiert und/oder mit einer Beschriftung versehen. Die hierdurch erreichte Hervorhebung der Mobileinheit mittels augmented reality erleichtert das schnelle Auffinden der Mobileinheit signifikant. Insbesondere kann die Mobileinheit auf dem Display mit Kontextinformationen versehen werden.

In weiter bevorzugter Ausgestaltung der Erfindung kann die Mobileinheit einen um einen Abstand zum ersten Sender versetzten zweiten Sender aufweisen, der ein vom Sensor empfangenes Zweitsignal aussendet. Aus dem vom Sensor effektiv gemessenen Abstand des ersten Senders zum zweiten Sender schließt das MES auf die Rotationslage der Mobileinheit. Das Zweitsignal kann in Form eines kodierten oder unkodierten Signals vorliegen. Vorzugsweise wird das Zweitsignal in Form eines Lichtsignals, insbesondere eines Lichtsignals im sichtbaren Bereich, ausgesendet.

Das erfindungsgemäße Verfahren kann weiterhin in einem Verfahrensschritt E) das Erstellen einer Aufnahme der Umgebung der Mobileinheit durch die Sensoreinheit und das Analysieren der Aufnahme, insbesondere durch das MES, umfassen. Das Erstellen der Aufnahme erfolgt dabei vorzugsweise mit dem zuvor beschriebenen Sensor, insbesondere in Form der Kamera, zum Empfang des kodierten Signals. Die Analyse kann durch einen Algorithmus mit einer künstlichen Intelligenz bzw. einem trainierten neuronalen Netz erfolgen. Die Sensoreinheit kann in einem weiteren Verfahrensschritt F) anhand der analysierten Aufnahme bewegt werden. Hierdurch wird ein besonders präzises Navigieren ermöglicht.

Die erfindungsgemäße Aufgabe wird weiterhin gelöst durch eine Vorrichtung, insbesondere zur Durchführung eines hier beschriebenen Verfahrens. Die Vorrichtung weist dabei eine Mobileinheit mit einem ersten Sender zur Ausstrahlung eines kodierten Signals, ein MES zum Bereitstellen von Grob-Positionsdaten der Mobileinheit, eine mobile Sensoreinheit mit einem Sensor zum Empfang des kodierten Signals und zum Ermitteln der Position des ersten Senders anhand des kodierten Signals sowie eine Steuereinrichtung zum Steuern der Sensoreinheit anhand der Grob-Positionsdaten auf, wobei die Steuereinrichtung dazu ausgebildet ist, die Mobileinheit anhand des kodierten Signals zu identifizieren, Signal-Positionsdaten des Senders zu ermitteln und die Grob-Positionsdaten anhand der Signal-Positionsdaten zu korrigieren.

Die Steuereinrichtung kann Teil des Manufacturing Execution System (MES) der Vorrichtung sein. Die Vorrichtung kann eine Blechverarbeitung und/oder einen Shopfloor aufweisen.

Das MES kann dazu ausgebildet sein, die Grob-Positionsdaten anhand einer Verbuchung zu ermitteln. Alternativ oder zusätzlich dazu kann die Vorrichtung ein Ortungssystem zum Bereitstellen der Grob-Positionsdaten aufweisen. Das Ortungssystem kann in Form eines Ultra-Breitband-Messsystems und/oder eines Bluetooth-Messsystems ausgebildet sein.

Die Mobileinheit kann ein E-Ink-Display zur Darstellung von Fertigungsdaten aufweisen.

Die Sensoreinheit kann ein fahrerloses Transportfahrzeug aufweisen. Vorzugsweise ist die Sensoreinheit in Form eines fahrerlosen Transportfahrzeugs ausgebildet.

Zur Ermittlung der Rotationslage der Mobileinheit kann die Mobileinheit einen zum ersten Sender versetzten zweiten Sender aufweisen, der dazu ausgebildet ist, ein vom Sensor empfangbares Zweitsignal zu senden, wobei das MES dazu ausgebildet ist, aus dem effektiv messbaren Abstand der beiden Sender auf die Rotationslage der Mobileinheit zu schließen.

Der Sensor kann zur Aufnahme des kodierten Signals und/oder zur Aufnahme der Umgebung der Mobileinheit in Form einer Kamera ausgebildet sein. Das MES kann dazu ausgebildet sein, insbesondere mit einem neuronalen Netz, die Aufnahme der Umgebung zu analysieren und die Sensoreinheit anhand der analysierten Aufnahme zu navigieren.

Die Sensoreinheit kann ein Handheld Device aufweisen. Die Sensoreinheit kann in Form eines Handheld Device ausgebildet sein. Das Handheld Device kann in Form eines Smartphones ausgebildet sein. Das Handheld Device kann einen ersten Sensor in Form einer, insbesondere in das Handheld Device integrierten, Kamera aufweisen. Das Handheld Device kann ein Display aufweisen, um eine von der Kamera aufgenommene Aufnahme der Mobileinheit anzuzeigen. Das Handheld Device kann dazu ausgebildet sein, die auf dem Display angezeigte Aufnahme der Mobileinheit hervorzuheben, zu markieren und/oder mit einer Beschriftung zu versehen.

Weitere Vorteile der Erfindung ergeben sich aus der Beschreibung und der Zeichnung. Ebenso können die vorstehend genannten und die noch weiter ausgeführten Merkmale jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine schematische Ansicht einer erfindungsgemäßen Vorrichtung zur Durchführung des erfindungsgemäßen Verfahrens.
- Fig. 2a: zeigt eine schematische Ansicht einer Mobileinheit mit einem ersten Sender und einem zweiten Sender.
- Fig. 2b: zeigt die Ansicht gemäß Fig. 2a bei gedrehter Mobileinheit zur Demonstration der Rotationslagenbestimmung der Mobileinheit.

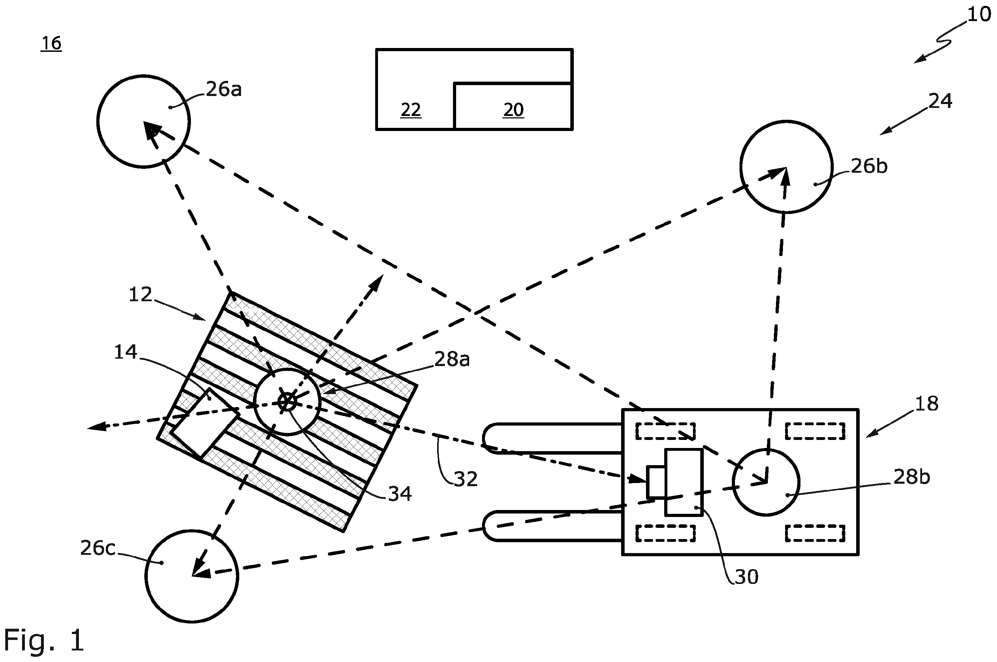

**Fig. 1** zeigt eine Vorrichtung **10** mit einem Sammelträger **12.** Der Sammelträger 12 kann zur Aufnahme eines Werkstücks **14** in Form einer Palette ausgebildet sein. Der Sammelträger 12 befindet sich in einem Industriefertigungsumfeld **16** in Form einer Blechverarbeitungsanlage bzw. eines Shopfloors.

Im vorliegenden Fall soll der Sammelträger 12 durch eine Sensoreinheit **18** bewegt werden. Die Sensoreinheit 18 ist dabei in Form eines führerlosen Fahrzeugs ausgebildet. Die Steuerung der Sensoreinheit 18 erfolgt durch eine Steuereinrichtung **20.** Die Steuereinrichtung 20 ist Teil eines Manufacturing Execution Systems (MES) **22.**

Die präzise Steuerung der Sensoreinheit 18 erfordert regelmäßig statische Anschläge (nicht gezeigt). Um eine flexible Fertigung zu ermöglichen, sollen derlei statische Anschläge jedoch möglichst vermieden werden. Erfindungsgemäß wird daher eine besonders präzise Lokalisierung des Sammelträgers 12 vorgeschlagen. Das MES 22 führt zunächst die mit dem MES 22 datentechnisch verbundene Sensoreinheit 18 in einem Verfahrensschritt A) grob zu dem Sammelträger 12. Die Information zur Grobposition des Sammelträgers 12, d.h. Grob-Positionsdaten, kann das MES 22 aus einer Verbuchung erhalten. Alternativ oder zusätzlich dazu kann das MES 22 die Grob-Positionsdaten von einem Ortungssystem **24** erhalten.

Das Ortungssystem 24 kann mehrere Anker **26a, 26b, 26c** aufweisen. Weiterhin kann das Ortungssystem 24 eine Mobileinheit **28a** am Sammelträger 12 und eine weitere Mobileinheit **28b** an der Sensoreinheit 18 aufweisen. Die Mobileinheiten 28a, b sind durch die Anker 26a-c lokalisierbar.

Nachdem die Sensoreinheit 18 in einem Verfahrensschritt B) zumindest in die Nähe des Sammelträgers 12 bzw. der Mobileinheit 28a bewegt wurde, empfängt ein Sensor **30** der Sensoreinheit 18 in einem Verfahrensschritt C) ein kodiertes Signal **32** der Mobileinheit 28a. Zum Senden des kodierten Signals 32 weist die Mobileinheit einen ersten Sender **34** auf. Anhand des kodierten Signals 32 ist die Mobileinheit 28a identifizierbar. Das kodierte Signal 32 erlaubt weiterhin die Ermittlung von präzisen Signal-Positionsdaten. Die Signal-Positionsdaten erlauben die Korrektur der Grob-Positionsdaten in einem Verfahrensschritt D), sodass die Sensoreinheit 18 präzise zum Sammelträger 12 bzw. zur Mobileinheit 28a bewegbar ist.

Der Sensor 30 ist vorzugsweise in Form einer Kamera ausgebildet. Der erste Sender 34 ist vorzugsweise zur Abgabe des kodierten Signals 32 in Form eines, insbesondere sichtbaren, Lichtstrahls ausgebildet.

Das Bewegen der Sensoreinheit 18 wird weiterhin erleichtert, wenn in einem Verfahrensschritt E), insbesondere mit dem Sensor 30, eine Aufnahme der Umgebung der Mobileinheit 28a erstellt und analysiert wird. Zur Analyse kann dabei ein Algorithmus mit einem neuronalen Netz, insbesondere im MES 22, eingesetzt werden. Anschließend kann die Sensoreinheit 18 in einem Verfahrensschritt F) anhand der analysierten Aufnahme weiterbewegt werden.

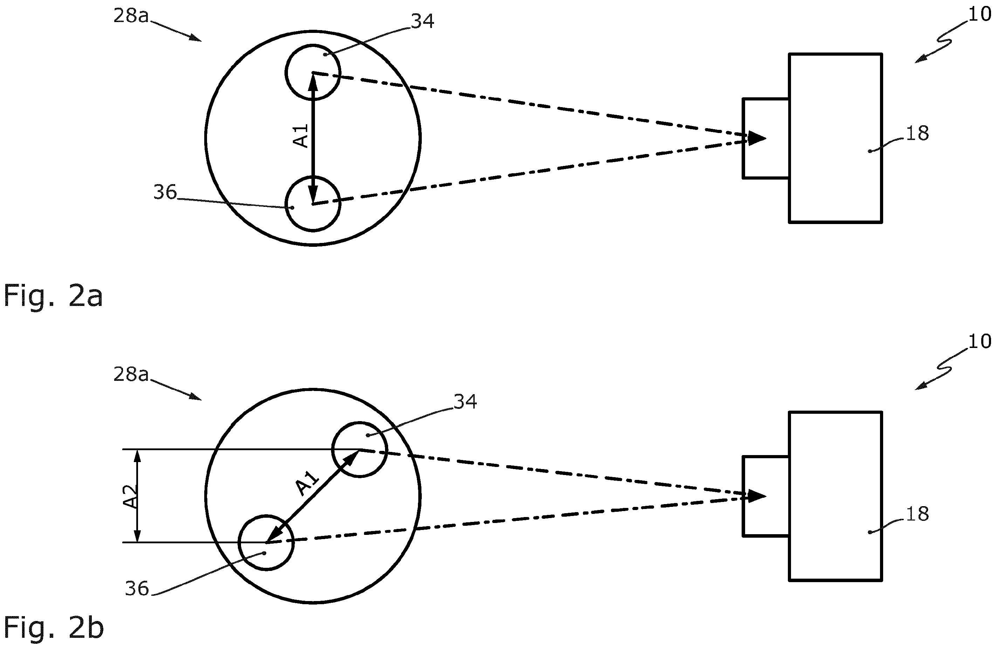

**Fig. 2a** zeigt einen Teil einer Vorrichtung 10 mit einer Sensoreinheit 18 und einer Mobileinheit 28a, wobei die Mobileinheit 28a zusätzlich zu einem ersten Sender 34 einen zweiten Sender **36** aufweist. Die beiden Sender 34, 36 sind in einem bekannten Abstand **A1** angeordnet. Der Abstand A1 wird in Fig. 2a vom Sensor 30, der hier als Kamera ausgebildet ist, als effektiver Abstand der beiden Sender 34, 36 detektiert.

**Fig. 2b** zeigt die Vorrichtung 10 gemäß Fig. 2a, allerdings mit verdrehter Mobileinheit 28a. In diesem Fall detektiert die Sensoreinheit 18 nicht den Abstand A1 als effektiven Abstand der beiden Sender 34, 36, sondern den Abstand **A2.** Aus einem Vergleich der Abstände A1 und A2 ist es der Sensoreinheit 18 und/oder dem MES 22 (siehe Fig. 1) möglich, die Rotationslage der Mobileinheit 28a zu ermitteln.

Unter Vornahme einer Zusammenschau aller Figuren der Zeichnung betrifft die Erfindung zusammenfassend ein Verfahren zur präzisen Lokalisierung einer Mobileinheit 28a und zur Navigation einer Sensoreinheit 18 relativ zur Mobileinheit 28a. Das Verfahren beinhaltet die Grob-Navigation der Sensoreinheit 18 zu der Mobileinheit 28a durch ein MES 22. Das MES 22 kann die dazu nötigen Grob-Positionsdaten von einer Verbuchung und/oder einem Ortungssystem 24 erhalten. Die Mobileinheit 28a weist einen ersten Sender 34 auf, der dazu ausgebildet ist, ein kodiertes Signal 32 zu senden. Dieses kodierte Signal 32 wird von einem Sensor 30 der Sensoreinheit 18 empfangen. Anhand des kodierten Signals 32 wird die Mobileinheit 28a identifiziert und ihre Signal-Positionsdaten ermittelt. Das MES 22 kann dazu ausgebildet sein, die Sensoreinheit 18 anhand der präzisen Signal-Positionsdaten weiter zu navigieren. Die Erfindung betrifft weiterhin eine Vorrichtung 10 zur entsprechenden Navigation einer Sensoreinheit 18.

### Bezugszeichenliste

- 10: Vorrichtung
- 12: Sammelträger
- 14: Werkstück
- 16: Industriefertigungsumfeld
- 18: Sensoreinheit
- 20: Steuereinrichtung
- 22: Manufacturing Execution System (MES)
- 24: Ortungssystem
- 26a-c: Anker
- 28a: Mobileinheit
- 28b: weitere Mobileinheit
- 30: Sensor
- 32: kodiertes Signal
- 34: erster Sender
- 36: zweiter Sender
- A1: tatsächlicher Abstand zwischen erstem Sender 34 und zweitem Sender 36
- A2: effektiver Abstand erstem Sender 34 und zweitem Sender 36

## Patentansprüche

1. Verfahren zur Ortung einer Mobileinheit (28a) in einem Industriefertigungsumfeld (16) mit den Verfahrensschritten:
A) Groblokalisierung der Mobileinheit (28a) durch Grob-Positionsdaten eines Manufacturing Execution Systems (MES) (22);
B) Bewegen einer einen Sensor (30) aufweisenden Sensoreinheit (18) zur Mobileinheit (28a) anhand der Grob-Positionsdaten;
**gekennzeichnet durch**:
C) Empfang eines von der Mobileinheit (28a) ausgesendeten kodierten Lichtsignals (32) durch den Sensor (30) und Feinlokalisierung der Mobileinheit (28a), wobei der Sensor (30) die Position eines ersten Senders (34) des kodierten Lichtsignals (32) ermittelt und in Form von Signal-Positionsdaten bereitstellt;
D) Identifizieren der Mobileinheit (28a) anhand des kodierten Lichtsignals (32) und Korrektur der Grob-Positionsdaten anhand der Signal-Positionsdaten.

2. Verfahren nach Anspruch 1, wobei ein Ortungssystem (24) dem MES (22) die Grob-Positionsdaten bereitstellt, wobei das Ortungssystem (24) mehrere Anker (26a-c) zur Laufzeitbestimmung eines Signals von der Mobileinheit (28a) aufweist.

3. Verfahren nach Anspruch 1 oder 2, bei dem das MES (22) die Grob-Positionsdaten aus einer Verbuchung ermittelt.

4. Verfahren nach einem der vorhergehenden Ansprüche, bei dem die Sensoreinheit (18) im Verfahrensschritt B) ein fahrerloses Transportfahrzeug aufweist.

5. Verfahren nach einem der vorhergehenden Ansprüche, bei dem sich die Mobileinheit (28a) auf und/oder an einem Sammelträger (12) befindet.

6. Verfahren nach einem der vorhergehenden Ansprüche, bei dem das kodierte Lichtsignal (32) im Verfahrensschritt C) durch den Sensor (30) in Form einer Kamera empfangen wird.

7. Verfahren nach einem der vorhergehenden Ansprüche, bei dem die Sensoreinheit (18) im Verfahrensschritt B) ein Handheld Device aufweist.

8. Verfahren nach Anspruch 7, bei dem die Mobileinheit (28a), wenn sie vom Sensor (30) in Form einer Kamera erfasst wird, auf einem Display des Handheld Device angezeigt wird.

9. Verfahren nach Anspruch 8, bei dem die auf dem Display angezeigte Mobileinheit (28a) auf dem Display hervorgehoben, markiert und/oder mit einer Beschriftung versehen wird.

10. Verfahren nach einem der vorhergehenden Ansprüche, bei dem die Mobileinheit (28a) einen um einen bekannten Abstand (A1) zum ersten Sender (34) versetzten zweiten Sender (36) aufweist, der ein vom Sensor (30) empfangenes Zweitsignal sendet, wobei das MES (22) aus dem tatsächlich gemessenen Abstand (A2) des ersten Senders (34) zum zweiten Sender (36) auf die Rotationslage der Mobileinheit (28a) schließt.

11. Verfahren nach einem der vorhergehenden Ansprüche, bei dem vor oder nach dem Verfahrensschritt D) folgender Verfahrensschritt durchgeführt wird:
E) Erstellen einer Aufnahme der Umgebung der Mobileinheit (28a) durch die Sensoreinheit (18) und Analysieren der Aufnahme.

12. Vorrichtung (10) zur Ortung einer Mobileinheit (28a) in einem Industriefertigungsumfeld (16), insbesondere zur Durchführung eines Verfahrens nach einem der vorhergehenden Ansprüche, wobei die Vorrichtung (10) Folgendes aufweist:
a) Eine Mobileinheit (28a) mit einem ersten Sender (34) zur Ausstrahlung eines kodierten Lichtsignals (32);
b) ein MES (22) zum Bereitstellen von Grob-Positionsdaten der Mobileinheit (28a);
c) eine mobile Sensoreinheit (18) mit einem Sensor (30) zum Empfang des kodierten Lichtsignals (32) und zum Ermitteln der Position des ersten Senders (34) des kodierten Lichtsignals (32);
d) eine Steuereinrichtung (20) zum Steuern der Sensoreinheit (18) anhand der Grob-Positionsdaten, wobei die Steuereinrichtung (20) dazu ausgebildet ist, die Mobileinheit (28a) anhand des kodierten Lichtsignals (32) zu identifizieren, Signal-Positionsdaten des ersten Senders (34) des kodierten Lichtsignals (32) zu ermitteln und die Grob-Positionsdaten anhand der Signal-Positionsdaten zu korrigieren.

13. Vorrichtung nach Anspruch 12, bei der die Vorrichtung (10) ein Ortungssystem (24) zur Bereitstellung der Grob-Positionsdaten an das MES (22) aufweist.

14. Vorrichtung nach einem der Ansprüche 12 oder 13, wobei die Mobileinheit (28a) ein E-Ink-Display zur Darstellung von Fertigungsdaten aufweist.

15. Vorrichtung nach einem der Ansprüche 12 bis 14, bei der die Sensoreinheit (18) ein fahrerloses Transportfahrzeug und/oder ein Handheld Device aufweist.

16. Vorrichtung nach einem der Ansprüche 12 bis 15, bei der die Mobileinheit (28a) einen um einen bekannten Abstand (A1) zum ersten Sender (34) versetzten zweiten Sender (36) aufweist, der dazu ausgebildet ist, ein vom Sensor (30) empfangbares Zweitsignal zu senden, wobei das MES (22) aus dem tatsächlich messbaren Abstand (A2) des ersten Senders (34) zum zweiten Sender (36) auf die Rotationslage der Mobileinheit (28a) schließen kann.

17. Vorrichtung nach einem der Ansprüche 12 bis 16, bei der der Sensor (30) zur Aufnahme des kodierten Lichtsignals (32) und/oder zur Aufnahme der Umgebung der Mobileinheit (28a) in Form einer Kamera ausgebildet ist.

## Claims

1. A method for localizing a mobile unit (28a) in an industrial manufacturing environment (16) comprising the method steps:
A) rough localization of the mobile unit (28a) using rough position data of a manufacturing execution system (MES) (22);
B) moving a sensor unit (18) having a sensor (30) to the mobile unit (28a) based on the rough position data;
**characterized by**:
C) receiving a coded light signal (32), which is transmitted by the mobile unit (28a), by means of the sensor (30) and fine localization of the mobile unit (28a), wherein the sensor (30) determines the position of a first transmitter (34) of the coded light signal (32) and makes it available in the form of signal position data;
D) identifying the mobile unit (28a) based on the coded light signal (32) and correcting the rough position data based on the signal position data.

2. A method according to claim 1, wherein a localization system (24) provides the rough position data to the MES (22), wherein the localization system (24) comprises a plurality of anchors (26a-c) for the transit time determination of a signal from the mobile unit (28a).

3. A method according to claim 1 or 2, in which the MES (22) determines the rough position data from an update.

4. A method according to any one of the preceding claims, in which the sensor unit (18) in method step B) has a driverless transport vehicle.

5. A method according to any one of the preceding claims, in which the mobile unit (28a) is located on and/or at a collecting carrier (12).

6. A method according to any one of the preceding claims, in which the coded light signal (32) in method step C) is received by the sensor (30) in the form of a camera.

7. A method according to any one of the preceding claims, in which the sensor unit (18) in method step B) has a handheld device.

8. A method according to claim 7, in which the mobile unit (28a), when it is detected by the sensor (30) in the form of a camera, is displayed on a display of the handheld device.

9. A method according to claim 8, in which the mobile unit (28a) displayed on the display is highlighted, marked and/or provided with a label on the display.

10. A method according to any one of the preceding claims, in which the mobile unit (28a) has a second transmitter (36) which is offset by a known distance (A1) from the first transmitter (34) and which transmits a second signal received by the sensor (30), wherein the MES (22) infers the rotational position of the mobile unit (28a) from the actually measured distance (A2) of the first transmitter (34) from the second transmitter (36).

11. A method according to any one of the preceding claims, in which the following method step is carried out before or after method step D):
E) creating a recording of the environment of the mobile unit (28a) by means of the sensor unit (18) and analyzing the recording.

12. An apparatus (10) for localizing a mobile unit (28a) in an industrial manufacturing environment (16), in particular for carrying out a method according to any one of the preceding claims, wherein the apparatus (10) comprises the following:
a) a mobile unit (28a) comprising a first transmitter (34) for transmitting a coded light signal (32);
b) an MES (22) for providing rough position data of the mobile unit (28a);
c) a mobile sensor unit (18) comprising a sensor (30) for receiving the coded light signal (32) and for determining the position of the first transmitter (34) of the coded light signal (32);
d) a control device (20) for controlling the sensor unit (18) based on the rough position data, wherein the control device (20) is configured to identify the mobile unit (28a) based on the coded light signal (32), to determine signal position data of the first transmitter (34) of the coded light signal (32) and to correct the rough position data based on the signal position data.

13. An apparatus according to claim 12, in which the apparatus (10) comprises a localization system (24) for providing the rough position data to the MES (22).

14. An apparatus according to one of the claims 12 or 13, wherein the mobile unit (28a) has an e-ink display for displaying manufacturing data.

15. An apparatus according to any one of the claims 12 to 14, in which the sensor unit (18) comprises a driverless transport vehicle and/or a handheld device.

16. An apparatus according to any one of the claims 12 to 15, in which the mobile unit (28a) has a second transmitter (36) which is offset by a known distance (A1) from the first transmitter (34) and which is configured to transmit a second signal which can be received by the sensor (30), wherein the MES (22) can infer the rotational position of the mobile unit (28a) from the actually measurable distance (A2) of the first transmitter (34) from the second transmitter (36).

17. An apparatus according to any one of the claims 12 to 16, in which the sensor (30) is configured in the form of a camera for recording the coded light signal (32) and/or for recording the environment of the mobile unit (28a).

## Revendications

1. Procédé pour localiser une unité mobile (28a) dans un environnement de production industrielle (16), comprenant les étapes suivantes :
A) localisation approximative de l'unité mobile (28a) à l'aide de données de position approximatives d'un système d'exécution de fabrication (MES) (22) ;
B) déplacement d'une unité de détection (18) présentant un capteur (30) vers l'unité mobile (28a) à l'aide des données de position approximatives ;
**caractérisé par** :
C) réception par le capteur (30) d'un signal lumineux codé (32) émis par l'unité mobile (28a) et localisation précise de l'unité mobile (28a), le capteur (30) déterminant la position d'un premier émetteur (34) du signal lumineux codé (32) et la fournissant sous forme de données de position de signal ;
D) identification de l'unité mobile (28a) à l'aide du signal lumineux codé (32) et correction des données de position approximatives à l'aide des données de position de signal.

2. Procédé selon la revendication 1, dans lequel un système de localisation (24) fournit les données de position approximatives au MES (22), le système de localisation (24) présentant plusieurs ancres (26a-c) pour déterminer la durée de propagation d'un signal provenant de l'unité mobile (28a).

3. Procédé selon la revendication 1 ou 2, dans lequel le MES (22) détermine les données de position approximatives à partir d'une comptabilisation.

4. Procédé selon l'une des revendications précédentes, dans lequel l'unité de détection (18) présente, à l'étape B) du procédé, un véhicule de transport sans conducteur.

5. Procédé selon l'une des revendications précédentes, dans lequel l'unité mobile (28a) se trouve sur et/ou contre un support collecteur (12).

6. Procédé selon l'une des revendications précédentes, dans lequel le signal lumineux codé (32) est reçu à l'étape C) du procédé par le capteur (30) sous la forme d'une caméra.

7. Procédé selon l'une des revendications précédentes, dans lequel l'unité de détection (18) présente, à l'étape B) du procédé, un appareil portable.

8. Procédé selon la revendication 7, dans lequel l'unité mobile (28a), lorsqu'elle est détectée par le capteur (30) sous la forme d'une caméra, est affichée sur un écran de l'appareil portable.

9. Procédé selon la revendication 8, dans lequel l'unité mobile (28a) affichée sur l'écran est mise en évidence, marquée et/ou pourvue d'une inscription sur l'écran.

10. Procédé selon l'une des revendications précédentes, dans lequel l'unité mobile (28a) présente un deuxième émetteur (36) décalé d'une distance connue (A1) par rapport au premier émetteur (34), qui émet un deuxième signal reçu par le capteur (30), le MES (22) déduisant la position de rotation de l'unité mobile (28a) à partir de la distance (A2) effectivement mesurée entre le premier émetteur (34) et le deuxième émetteur (36).

11. Procédé selon l'une des revendications précédentes, dans lequel l'étape de procédé suivante est effectuée avant ou après l'étape de procédé D) :
E) réalisation d'un enregistrement de l'environnement de l'unité mobile (28a) par l'unité de détection (18) et analyse de l'enregistrement.

12. Dispositif (10) pour localiser une unité mobile (28a) dans un environnement de production industrielle (16), en particulier pour mettre en œuvre un procédé selon l'une des revendications précédentes, le dispositif (10) comprenant :
a) une unité mobile (28a) avec un premier émetteur (34) pour émettre un signal lumineux codé (32) ;
b) un MES (22) pour fournir des données de position approximatives de l'unité mobile (28a) ;
c) une unité de détection mobile (18) avec un capteur (30) pour recevoir le signal lumineux codé (32) et pour déterminer la position du premier émetteur (34) du signal lumineux codé (32) ;
d) un dispositif de commande (20) pour commander l'unité de détection (18) à l'aide des données de position approximatives, le dispositif de commande (20) étant conçu pour identifier l'unité mobile (28a) à l'aide du signal lumineux codé (32), déterminer des données de position de signal du premier émetteur (34) du signal lumineux codé (32) et corriger les données de position approximatives à l'aide des données de position de signal.

13. Dispositif selon la revendication 12, dans lequel le dispositif (10) présente un système de localisation (24) pour fournir les données de position approximatives au MES (22).

14. Dispositif selon l'une des revendications 12 ou 13, dans lequel l'unité mobile (28a) présente un écran e-Ink pour afficher des données de fabrication.

15. Dispositif selon l'une des revendications 12 à 14, dans lequel l'unité de détection (18) présente un véhicule de transport sans conducteur et/ou un appareil portable.

16. Dispositif selon l'une des revendications 12 à 15, dans lequel l'unité mobile (28a) présente un deuxième émetteur (36) décalé d'une distance connue (A1) par rapport au premier émetteur (34), qui est conçu pour émettre un deuxième signal pouvant être reçu par le capteur (30), le MES (22) pouvant déduire la position de rotation de l'unité mobile (28a) à partir de la distance effectivement mesurable (A2) entre le premier émetteur (34) et le deuxième émetteur (36).

17. Dispositif selon l'une des revendications 12 à 16, dans lequel le capteur (30) est conçu sous la forme d'une caméra pour capter le signal lumineux codé (32) et/ou pour enregistrer l'environnement de l'unité mobile (28a).
